# EUROPÄISCHE PATENTANMELDUNG

(11) **EP 3 747 729 A1**
(43) Veröffentlichungstag der Anmeldung: **09.12.2020**
(21) Anmeldenummer: 20162469.9
(22) Anmeldetag: 11.03.2020
(51) Int. Cl.: B62B 3/14

(54) **TRANSPORTWAGEN**

(30) Priorität: 06.06.2019 DE 102019115326
(71) Anmelder: Wanzl GmbH & Co. KGaA, 89340 Leipheim (DE)
(72) Erfinder: ACIKGÖZ, Ayhan, 89312 Günzburg (DE)

(57) **Zusammenfassung**

Die vorliegende Erfindung betrifft einen stapelbaren Transportwagen (10) mit einem fahrbaren Untergestell (20), mit einem Korb (30) zur Aufnahme von Ware und mit einer Schiebeeinrichtung (40), wobei am Untergestell (20) eine erste bewegliche Ablage (50) für größere Gegenstände vorgesehen ist und weiterhin der Transportwagen mit einer zweiten beweglichen Ablage (60) zum Abstellen von Kisten oder Getränkegebinden ausgestattet ist, wobei die zweite bewegliche Ablage (60) von einer Nichtgebrauchslage in eine Gebrauchslage verschwenkt werden kann und wechselbar am Untergestell (20) und dem Korb (30) angeordnet ist.

## Beschreibung

Die vorliegende Erfindung betrifft einen stapelbaren Transportwagen, insbesondere einen Einkaufswagen mit zwei beweglich gelagerten Ablagen.

Aus dem Stand der Technik sind bereits stapelbare Transportwagen bzw. Einkaufswagen bekannt. Beispielsweise ist aus der EP 0 141 398 B1 ein stapelbarer Transportwagen bekannt, der als zusätzliche Ablagefläche eine an dem der Schiebeeinrichtung zugeordneten Ende des Einkaufswagens angeordnete Ablage aufweist. Die Ablage, die insbesondere für die Aufnahme einer Getränkekiste vorgesehen ist, kann von einer Nichtgebrauchslage in eine Gebrauchslage geschwenkt werden. Sie ist aus zwei Teilen gebildet, die beweglich gelagert sind. Ein Teil ist in einer Haltevorrichtung gelagert, die unterhalb der Korbes ortsfest angeordnet ist. Der zweite Teil der Ablage ist ortsfest an einem Teil des Untergestells gelagert. Eine solche Ablage kann bei zwei unterschiedlichen Arten an Untergestellen angebracht werden.

Weitere solcher Ablagen, die insbesondere als sogenannte Ablagen für PET-Gebinde Einsatz finden, sind z.B. in der DE 10 2005 013 018 B3 oder der EP 1 667 889 B1 offenbart. Diese sind aus drei Teilen gebildet und entsprechend zum besseren Bewegen von der Gebrauchslage in die Nichtgebrauchslage sowie zum Verstauen in der Nichtgebrauchslage mit drei Gelenkanordnungen versehen.

Die bereits bekannten Ausführungsformen eignen sich jedoch nicht in Kombination mit einer weiteren Ablage z.B. in Form eines Bodenrostes, der zum besseren Stapeln im vorderen Bereich des Wagens beweglich, insbesondere drehbar am Untergestell angeordnet ist.

Im gestapelten Zustand einer Reihe an Wagen ist der Bodenrost im hinteren Bereich, d.h. dort, wo die Schiebeeinrichtung vorgesehen ist, höher angeordnet als im nicht gestapelten Zustand. Daher kommt es bei den bereits bekannten Ausführungen an Ablagen für Kisten, PET-Gebinde oder ähnliches, die im gestapelten Zustand in die Nichtgebrauchslage geklappt sind, zu Behinderungen, so dass die gewünschte möglichst geringe Stapeltiefe an Wagen im gestapelten Zustand nicht mehr eingehalten werden kann.

Auch ein Wechsel vor Ort in einem Supermarkt oder ein nachträgliches Anbringen einer Ablage für Getränkekisten oder Getränkegebinde erweist sich bei den bekannten Ablagen als nicht möglich.

Es ist daher die Aufgabe der vorliegenden Erfindung, einen verbesserten stapelbaren Transportwagen mit einer ersten beweglichen Ablage unterhalb des Korbes für schwere und größere Gegenstände und einer zweiten beweglichen Ablage, insbesondere für Getränkekisten oder Getränkegebinde, bereitzustellen.

Diese Aufgabe wird erfindungsgemäß durch einen stapelbaren Transportwagen mit den Merkmalen des Anspruchs 1 gelöst.

Danach ist der stapelbare Transportwagen mit einem fahrbaren Untergestell, mit einem Korb zur Aufnahme von Ware und mit einer Schiebeeinrichtung ausgestattet, wobei am Untergestell eine erste bewegliche Ablage für größere Gegenstände vorgesehen ist und weiterhin der Transportwagen mit einer zweiten beweglichen Ablage zum Abstellen von Kisten oder Getränkegebinden ausgestattet ist, wobei die zweite bewegliche Ablage von einer Nichtgebrauchslage in eine Gebrauchslage verschwenkt werden kann und wechselbar am Untergestell und dem Korb angeordnet ist.

Der Grundgedanke basiert auf der Überlegung, neben dem Korb zur Ablage von Ware weitere Ablagen zur Verfügung zu stellen. Hierfür bietet es sich an, eine Ablage unterhalb des Korbes bereitzustellen. Weiterhin macht der Einsatz einer Kistenablage Sinn, die entsprechend der Konstruktion des Untergestells angepasst ist, ohne die Stapeltiefe gleicher in Reihe abgestellter Wagen besonders zu vergrößern.

Hierbei kann die zweite bewegliche Ablage aus Drähten gebildet sein. Die Herstellung ist kostengünstig, eine Dauerbeständigkeit durch die Beschichtung des Drahtes gegeben. Ferner ist das Zusammenbauen einer solchen Ablage in einfacher Weise möglich.

Hierbei kann die zweite bewegliche Ablage vier Gelenkanordnungen aufweisen. Durch diese ist ein optimales Zusammenklappen der Ablage von der Gebrauchslage in die Nichtgebrauchslage gegeben. Ausreichend Beinfreiheit bei der Verwendung des Wagens ist vorhanden. Die zweite bewegliche Ablage kann auch auf einfache Weise von einer Gebrauchslage in eine Nichtgebrauchslage und umgekehrt bewegt werden.

Weiterhin kann die zweite bewegliche Ablage eine Ösenvorrichtung zur wechselbaren Anordnung der Ablage am Korb aufweisen. Hierdurch ist auch ein einfaches, wechselbares Anordnen der zweiten Ablage am Korb möglich. Auch besteht so die Möglichkeit, Wagen nachzurüsten. Gebauchte und wiederaufbereitete Wagen mit einer unterhalb des Korbes vorgesehenen ersten beweglichen Ablage können somit bei Bedarf nachträglich mit einer zweiten beweglichen Ablage ausgestattet werden.

Hierbei ist denkbar, dass die zweite bewegliche Ablage eine Halterung zur wechselbaren Anordnung der Ablage am Untergestell aufweist. Mittels dieser Halterung kann die zweite bewegliche Ablage einfach am Untergestell angebracht und bei Bedarf auch wieder entfernt werden. Es bietet sich eine zweiteilige Ausführung an, die mittels Befestigungsmitteln wechselbar an den vorhandenen Drähten des Untergestells angebracht werden kann.

Es kann vorteilhaft sein, dass an der Halterung mit einem ersten Drahtteil der zweiten beweglichen Ablage eine erste Gelenkanordnung gebildet ist. Das erste Drahtteil kann somit in einfacher Weise in die Halterung aufgenommen werden. Eine Drehachse kann somit bereits im Bereich der Halterung gebildet werden. Das reduziert den Platzbedarf der zweiten beweglichen Ablage in vorteilhafter Weise.

Weiterhin kann die Halterung für die Aufnahme des ersten Drahtteils eine Aufnahme vorsehen. Durch den Einsatz einer solchen Aufnahme erleichtert sich der Einbau des ersten Drahtteils an den Halterungen. Eine einfache Montage der zweiten Ablage wird somit ermöglicht.

Vorzugsweise ist zwischen dem ersten Drahtteil und einem zweiten Drahtteil, das den eigentlichen schräg angeordneten Ablagebereich bildet, eine zweite Gelenkanordnung vorgesehen.

Ferner kann zwischen dem zweiten Drahtteil und der Ösenvorrichtung eine dritte Gelenkanordnung vorgesehen sein.

Ferner ist denkbar, dass die bewegliche Anordnung der Ösenvorrichtung am Korb eine vierte Gelenkanordnung bildet.

Ein Platz sparendes Lagern der zweiten beweglichen Ablage in der Nichtgebrauchslage kann durch diese vier Gelenkanordnungen somit gewährleistet werden.

Weitere Einzelheiten und Vorteile der Erfindung sollen nun anhand von in den Zeichnungen dargestellten Ausführungsbeispielen näher erläutert werden. Es zeigen:
- Fig. 1: eine perspektivische Ansicht eines erfindungsgemäßen Transportwagens mit zweiter beweglicher Ablage in Gebrauchslage;
- Fig. 2: den gleichen Wagen in Seitenansicht;
- Fig. 3: eine perspektivische Ansicht eines erfindungsgemäßen Transportwagens mit zweiter beweglicher Ablage in Nichtgebrauchslage;
- Fig. 4: den gleichen Wagen in Seitenansicht, sowie
- Fig. 5: eine Detailansicht der zweiten beweglichen Ablage in Gebrauchslage.

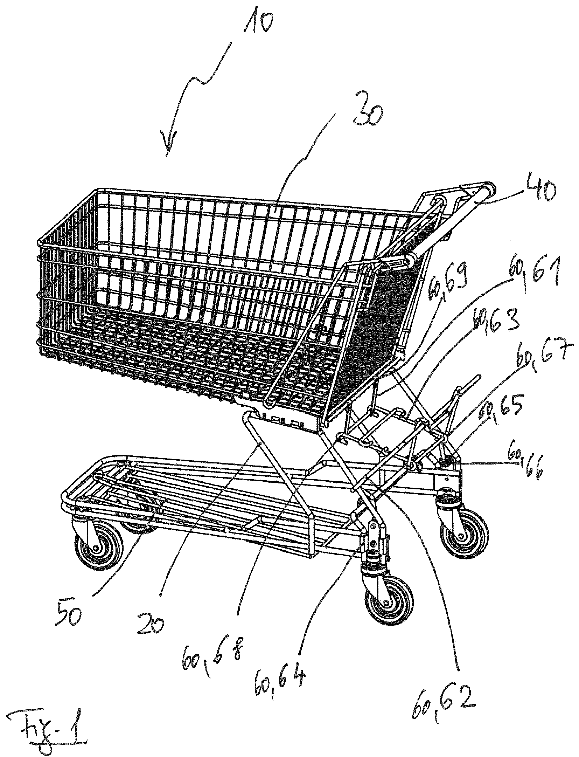

Fig. 1 zeigt einen stapelbaren Transportwagen 10 mit einem Fahrgestell 20, das einen Korb 30 zur Aufnahme von Ware trägt. Der Wagen 10 ist von Hand fahrbar und hierfür mit einer Schiebeeinrichtung 40 ausgestattet. Am Untergestell 20 ist im vorderen Bereich eine erste bewegliche Ablage 50 vorgesehen. Hier werden üblicherweise größere Gegenstände wie z.B. Getränkekisten abgestellt. Weiterhin ist der Transportwagen 10 mit einer zweiten beweglichen Ablage 60 zum Abstellen von weiteren Kisten, insbesondere Getränkekisten oder Getränkegebinden ausgestattet. Die zweite bewegliche Ablage 60 kann von einer Nichtgebrauchslage in eine Gebrauchslage, wie in Fig. 1 dargestellt, bewegt werden. Sofern ein Gebrauch nicht mehr notwendig ist, lässt sich die zweite Ablage 60 in einfacher Art und Weise wieder in die Nichtgebrauchslage bewegen. Die zweite Ablage 60 kann wechselbar am Untergestell 20 und dem Korb 30 angeordnet werden. Die zweite Ablage 60 ist aus Drähten gebildet und weist vier Gelenkanordnungen 66, 67, 68, 69 auf. Zum wechselbaren Anordnen der zweiten Ablage 60 am Untergestell 20 ist eine Halterung 64 vorgesehen. Die Halterung 64 ist zwischen zwei senkrecht verlaufenden und zwei waagrecht verlaufenden Drähten am Untergestell 20 wechselbar angebracht. Die senkrechten Drähte werden hierbei umschlossen. Eine zweiteilige Ausführung der Halterung 64 ermöglicht eine einfache, schnelle Anordnung sowie einen bequemen Wechsel der Halterung 64. Das zusätzliche Sichern der Halterung 64 mittel wenigstens eines Sicherungsmittels erweist sich als vorteilhaft.

Weiterhin sieht die Halterung 64 eine Aufnahme 65 für die Aufnahme des ersten Drahtteiles 62 vor. Wie den Figuren zu entnehmen, ist diese im oberen Bereich der Halterung 64 vorgesehen. Die Anordnung der Aufnahme 65 ist auf der Seite der Halterung 64 vorgesehen, die ins Innere 12 des Transportwagens 10 gerichtet ist. Die Aufnahme 65 ist bei jeder Halterung 64 vorgesehen, die rechts und links am Wagen 10 vorgesehen ist. Durch die Verwendung eines Kunststoffmaterials kann die Aufnahme 65 zusätzlich bei der Bewegung der zweiten Ablage 60 eine Dämpffunktion erfüllen und weiterhin kostengünstig hergestellt werden. Insbesondere beim Bewegen der Ablage 60 von der Nichtgebrauchslage in die Gebrauchslage kann es vorkommen, dass das erste Drahtteil 62 die Korbaufnahme 32 berühren könnte und hierdurch Geräusche entstehen, die einer Dämpfung bedürfen. Auch Schäden, die durch den wiederholten Gebrauch der zweiten Ablage 60 entstehen können, insbesondere an dem ersten Drahtteil 62 und der Korbaufnahme 32 können, hierdurch unterbunden werden.

Die zweite wechselbare Ablage 60 ist wenigstens aus einer Ösenvorrichtung 61, einem ersten Drahtteil 62 und einem zweiten Drahtteil 63 gebildet. Die drei Bauteile 61, 62, 63 sind durch die zweiten und dritten Gelenkanordnungen 67, 68 gelenkig miteinander verbunden.

Zum Anordnen der Ablage 60 an der Halterung 64 ist diese mit einer Aufnahme 65 für das erste Drahtteil 62 ausgestattet. Das erste Drahtteil 62 ist beweglich an der Halterung 64 angeordnet und lässt sich entsprechend der Form des ersten Drahtteils 62 um die erste Gelenkanordnung 66 bewegen. Begrenzt ist diese Bewegung durch die aus einem Draht gebildete Korbaufnahme 32.

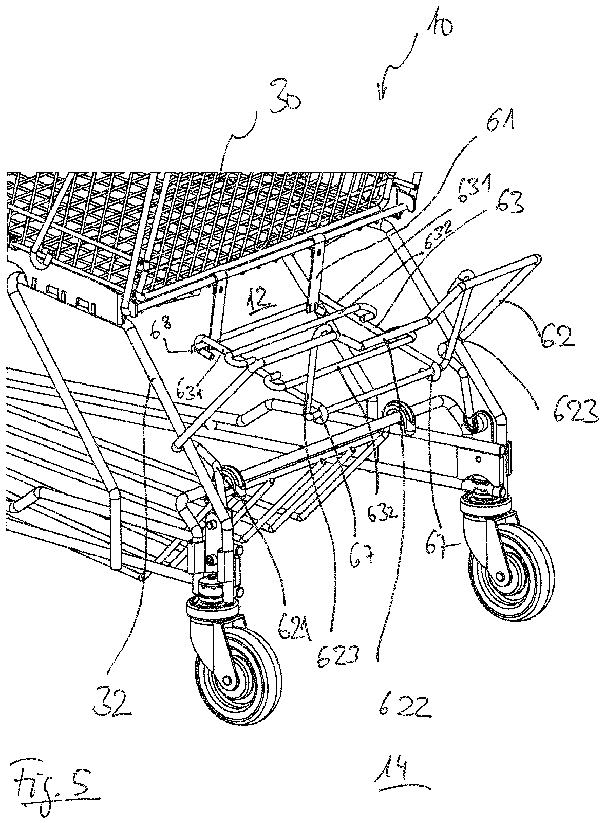

Wie in Fig. 5 dargestellt, ist das erste Drahtteil 62 an der linken Innenseite der Korbaufnahme 32 zunächst annähernd senkrecht gebildet, ist dann mit einer Abwinklung 621 versehen, umschlingt den Draht der Korbaufnahme 32 und ist dann auf der Außenseite der Korbaufnahme 32 schräg nach außen verlaufend. Indem das erste Drahtteil 62 den Draht der Korbaufnahme 32 umschlingt, ist ein Endanschlag gegeben, der die Schwenkbewegung der zweiten Ablage 60 begrenzt.

In Richtung Innenseite 12 des Wagens 10 weist das erste Drahtteil 62 eine Griffvorrichtung 622 auf, die derart geformt ist, dass der Draht in Richtung Boden 14 gebogen ist. Das erste Drahtteil 62 ist symmetrisch gebildet. Die Griffvorrichtung 622 in der Mitte vorgesehen. Ferner weist das erste Drahtteil 62 ein zur Griffvorrichtung 622 verlaufendes senkrechtes Drahtteil 623 auf, das in der Verbindung mit dem zweiten Drahtteil 63 die zweite Gelenkanordnung 67 bildet.

Das zweite Drahtteil 63 ist ebenfalls symmetrisch aus zwei leicht schräg nach oben und ins Innere des Wagens 12 verlaufenden Drähten 631 gebildet. Zusammen mit mindestens zwei weiteren Drähte 632, die quer zu den Drähten 631 angeordnet sind, bilden die Drähte 631, 632 den eigentlichen Ablagebereich. Die Drähte 632 sind ortsfest, vorzugsweise geschweißt, auf den Drähten 631 angeordnet. Die Drähte 632 weisen Ösen auf, die entlang der horizontalen Achse gedreht auf den Drähten 631 angebracht sind. Diese Ösen bilden hierbei ausreichend Fläche, um eine dauerhafte ortsfeste Verbindung herzustellen. Auch die Drähte 631 sind an ihren Enden mit Ösen versehen. Diese bilden jedoch die Möglichkeit, eine zweite und dritte Gelenkanordnung 67, 68 bereitzustellen.

Somit ist zwischen dem ersten Drahtteil 62 und dem zweiten Drahtteil 63, das den eigentlich schräg angeordneten Ablagebereich bildet, eine zweite Gelenkanordnung 67 vorgesehen. Weiterhin ist zwischen dem zweiten Drahtteil 63 und der Ösenvorrichtung 61 eine dritte Gelenkanordnung 68 vorgesehen.

Die bewegliche Anordnung der Ösenvorrichtung 61 am Korb 30, insbesondere am äußersten Draht am Boden des Korbes 30, bildet dann die vierte Gelenkanordnung 69.

Wie insbesondere den Figuren 1 und 5 zu entnehmen, ist die Ösenvorrichtung 61 aus einem waagrechten Draht gebildet, der für die Ösen der Drähte 631 die Aufnahme bildet. Somit ist eine vierte Gelenkanordnung 69 realisierbar. Weiterhin ist die Ösenvorrichtung 61 mit zwei senkrechten Flachstählen ausgestattet, die im rechten Winkel ortsfest mit dem waagrechten Draht verbunden sind. Die senkrechten Flachstähle sind am oberen Ende in Form einer Öse gebogen, so dass ein einfaches Anordnen an einem Draht am Boden des Korbes 30 möglich ist. Zum Entfernen der zweiten Ablage 60 können die Ösen der Flachstähle auf einfache Art wieder von dem Draht am Boden des Korbes 30 gelöst werden. Die Ösen der Flachstähle sind vorzugsweise derart ausgeführt, dass ein selbständiges Lösen dieser von dem Draht des Bodens nicht erfolgen kann. Hierfür weist jede Öse an ihrem Ende einen kleinen Abschnitt auf, der derart gebogen ist, dass der Abstand zum übrigen Flachstahl geringer ausgeführt ist. Ferner kann an diesem kleinen Endabschnitt eine Bohrung vorgesehen sein, die die Aufnahme eines zusätzlichen Sicherungselements ermöglicht.

In einer alternativen Ausführungsform kann anstelle eines Flachstahls auch ein Draht verwendet werden.

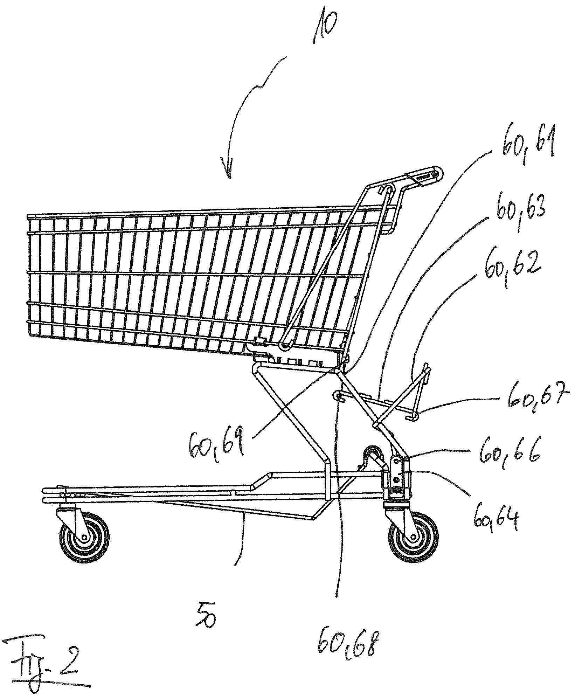

Figur 2 zeigt den Wagen 10 mit der zweiten Ablage 60 in Gebrauchslage. Das erste Drahtteil 62 und die Ösenvorrichtung 61 befinden sich im annähernd rechten Winkel zu dem zweiten Drahtteil 63. Die zweite Ablage 60 kann somit optimal genutzt werden.

Auch können weitere größere Gegenstände auf der ersten Ablage 50 abgestellt werden, ohne, dass sich beide Ablagen 50, 60 bzw. die darauf abgestellten Gegenstände behindern.

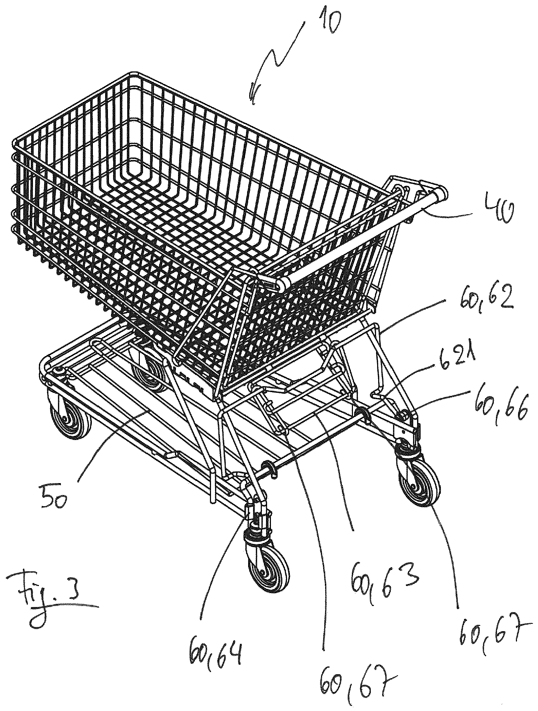

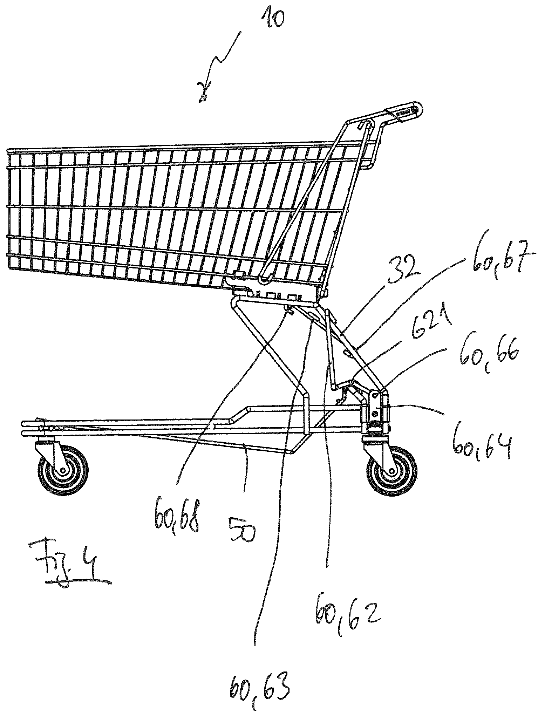

In den Figuren 3 und 4 ist der Wagen 10 mit einer zweiten Ablage 60 in Nichtgebrauchslage dargestellt. Der Wagen 10 kann verwendet werden, ohne, dass die zweite Ablage 60 das Schieben des Wagens 10 behindert. Die Form der Korbaufnahme 32 bildet hierfür die entsprechende Vorgabe. In der dargestellten Ausführung ist die Korbaufnahme 32 aus einem nach unten geöffneten U gebildet, das schräg in Richtung Fahrtrichtung des Wagens 10 gebogen ist. Durch diese Position gibt es zusammen mit der üblichen Positionierung der Schiebeeinrichtung 40 ausreichend Platz den Wagen 10 in bequemer Weise zu schieben.

Auch besteht keine Einschränkung zur Nutzung der ersten beweglichen Ablage 50, wenn die zweite Ablage 60 in der Nichtgebrauchslage verweilt. Durch die Abwinklung 621 verweilt die zweite Ablage 60 platzsparend und mit abstützender Wirkung auf einem waagrechten Draht, der am Untergestell zur Ablage der ersten Ablage 50 bereits vorhanden ist.

### Bezugszeichen

- 10: Transportwagen, Wagen
- 12: Innenseite, Innere Transportwagen
- 14: Boden
- 20: Untergestell, Fahrgestell
- 30: Korb
- 32: Korbaufnahme
- 40: Schiebeeinrichtung
- 50: erste bewegliche Ablage, erste Ablage
- 60: zweite bewegliche Ablage, zweite Ablage
- 61: Ösenvorrichtung
- 62: erste Drahtteil
- 621: Abwinklung
- 622: Griffvorrichtung
- 623: Drahtteil senkrecht
- 63: zweite Drahtteil
- 631, 632: Draht
- 64: Halterung
- 65: Aufnahme
- 66: erste Gelenkanordnung
- 67: zweite Gelenkanordnung
- 68: dritte Gelenkanordnung
- 69: vierte Gelenkanordnung

## Patentansprüche

1. Stapelbarer Transportwagen (10) mit einem fahrbaren Untergestell (20), mit einem Korb (30) zur Aufnahme von Ware und mit einer Schiebeeinrichtung (40), wobei am Untergestell (20) eine erste bewegliche Ablage (50) für größere Gegenstände vorgesehen ist und weiterhin der Transportwagen mit einer zweiten beweglichen Ablage (60) zum Abstellen von Kisten oder Getränkegebinden ausgestattet ist, wobei die zweite bewegliche Ablage (60) von einer Nichtgebrauchslage in eine Gebrauchslage verschwenkt werden kann und wechselbar am Untergestell (20) und dem Korb (30) angeordnet ist.

2. Stapelbarer Transportwagen nach Anspruch 1, **dadurch gekennzeichnet, dass** die zweite bewegliche Ablage (60) aus Drähten gebildet ist.

3. Stapelbarer Transportwagen nach Anspruch 1, **dadurch gekennzeichnet, dass** die zweite bewegliche Ablage (60) vier Gelenkanordnungen (66, 67, 68, 69) aufweist.

4. Stapelbarer Transportwagen nach Anspruch 1, **dadurch gekennzeichnet, dass** die zweite bewegliche Ablage (60) eine Ösenvorrichtung (61) zur wechselbaren Anordnung der zweiten beweglichen Ablage (60) am Korb (30) aufweist.

5. Stapelbarer Transportwagen nach Anspruch 1, **dadurch gekennzeichnet, dass** die zweite bewegliche Ablage (60) eine Halterung (64) zur wechselbaren Anordnung der zweiten beweglichen Ablage (60) am Untergestell (20) aufweist.

6. Stapelbarer Transportwagen nach Anspruch 5, **dadurch gekennzeichnet, dass** an der Halterung (64) mit einem ersten Drahtteil (62) der zweiten beweglichen Ablage (60) eine erste Gelenkanordnung (66) gebildet ist.

7. Stapelbarer Transportwagen nach Anspruch 6, **dadurch gekennzeichnet, dass** für die Aufnahme des ersten Drahtteils (62) die Halterung (64) eine Aufnahme (65) vorsieht.

8. Stapelbarer Transportwagen nach einem der vorhergehenden Ansprüche, **dadurch gekennzeichnet, dass** zwischen dem ersten Drahtteil (62) und einem zweiten Drahtteil (63), das den eigentlichen schräg angeordneten Ablagebereich bildet, eine zweite Gelenkanordnung (67) vorgesehen ist.

9. Stapelbarer Transportwagen nach einem der vorhergehenden Ansprüche, **dadurch gekennzeichnet, dass** zwischen dem zweiten Drahtteil (63) und der Ösenvorrichtung (61) eine dritte Gelenkanordnung (68) vorgesehen ist.

10. Stapelbarer Transportwagen nach einem der vorhergehenden Ansprüche, **dadurch gekennzeichnet, dass** die bewegliche Anordnung der Ösenvorrichtung (61) am Korb (30) eine vierte Gelenkanordnung (69) bildet.
